# EUROPEAN PATENT APPLICATION

(11) **EP 3 812 141 A1**
(43) Date of publication of application: **28.04.2021**
(21) Application number: 19205146.4
(22) Date of filing: 24.10.2019
(51) Int. Cl.: B29C 70/88, B29C 70/02, B29K 507/04, B29K 105/16, B29K 101/12

(54) **CONDUCTIVE COMPOSITE PARTS**

(71) Applicant: Arrival Limited, London W14 8TS (GB)
(72) Inventor: THOMPSON, Rob, London, W14 8TS (GB); CHAPMAN, Jennifer, London, W14 8TS (GB); ALLUM, Joe, London, W14 8TS (GB)
(74) Representative: Korenberg, Alexander Tal

(57) **Abstract**

Disclosed is a method of manufacturing a conductive composite part (200). First, a composite layer (202) comprising a thermoplastic polymer and structural fibres (204) is provided. Conductive particles (206) are applied to a surface of the composite layer which is then heated above a consolidation temperature, before being cooled to below the consolidation temperature to form the conductive composite part. Also disclosed is a conductive composite structure comprising a composite layer with structural fibres in a matrix of thermoplastic polymer, wherein conductive particles are disposed within the composite layer and the composite layer comprises regions of thermoplastic polymer substantially free of conductive particles.

## Description

The present disclosure relates to a method for manufacturing conductive composite parts using a composite layer, the composite layer and the resulting conductive composite parts.

A composite part is a part that is made from a composite material, which is a material made from two or more constituent materials with different physical or chemical properties that, when combined, produce a material with characteristics different from the individual components. The individual components remain separate and distinct within the finished part, differentiating composites from mixtures. The new material may be preferred for many reasons, for example the composite material may offer a mechanical or cost advantage when compared to mono-materials. Naturally, these benefits are also exhibited by a composite part made from a composite material.

Thermoplastic composites are composites comprising a heat-processable thermoplastic polymer or a thermoplastic polymer polymerised in situ. Composite parts formed from thermoplastic composite materials may be preferred to thermoset composites since they tend to be tougher and recyclable; and certain types exhibit excellent resistance to chemicals and weathering (with increased molecular weight and crystallinity, thermoplastics become stiffer, stronger and more resistant to heat and chemicals). Thermoplastic composite materials are available in many forms, for example, as fabrics made from structural fibres, such as glass fibres, and thermoplastic polymer fibres, which are combined together, for example commingled, and then woven together into a fabric.

Conductive composite parts have valuable anti-static and electromagnetic shielding properties, while monitoring the conductivity of a conductive composite part provides a way of detecting strain or damage to the part. Existing solutions for imparting plastic composites with conductivity comprise the preparation of plastics with a homogeneous dispersion of conductive particles, such as carbon black or carbon nanotubes, in the bulk of the plastic. As such, costly functionalisation of the surface of the particles and complex processing are generally required. In particular, it is well established that carbon nanotubes offer a great deal of theoretical benefits, such as a high strength-to-weight ratio and high conductivity. However, they are expensive and difficult to incorporate into the bulk of a plastic in practice.

Thus, new ways of introducing conductivity into polymers to bridge the gap between commodity and performance materials, without the cost implication, are needed.

Aspects of the disclosure are set out in the independent claims and optional features are set out in the claims dependent thereon.

Disclosed is a method of manufacturing a conductive composite part. First, a composite layer comprising a thermoplastic polymer and structural fibres is provided. Conductive particles are applied to a surface of the composite layer which is then heated above a consolidation temperature, before being cooled to below the consolidation temperature to form the conductive composite part. Thus, the disclosed method employs a fundamentally new approach for providing conductivity in plastic composite materials that avoids the difficulty of providing a polymer with bulk conductivity. The result may comprise paths of conductive particles within a thermoplastic polymer that has no bulk conductivity itself. That is to say that paths of conductive particles may be separated by bulk thermoplastic polymer substantially free of conductive particles.

The thermoplastic polymer may be provided in the form of a fabric comprising a weave of thermoplastic polymer fibres. A fabric can be understood to be a weave or mesh of fibres and these terms are used interchangeably. The fabric may comprise a weave of combined, for example commingled, fibres, the combined fibres forming threads or yarn comprising thermoplastic polymer and structural fibres combined together. That is, the fabric may be woven from threads of structural and polymer fibres that are already combined together. Alternatively, the fibres may be combined as they are woven, for example by parallel weaving the separate fibres into the same fabric at the same time. As such, the conductive particles may be disposed between thermoplastic polymer fibres of the composite layer and result in paths of conductive particles in the consolidated polymer material after the heating and cooling steps. Suitable materials for the thermoplastic polymer include polypropylene or a polyester such as polyethylene terephthalate. The structural fibres may be glass fibres, carbon fibres or other types of reinforcing fibres. In the case of carbon or metallic fibres, this may further increase the conductivity of the composite.

The terms "yarn" and thread are used in a broad sense to cover any yarn or thread of a suitable form factor to be woven, knitted or otherwise constructed into a fabric. In the same sense, the term "fibre" is understood to cover a wide range filaments and cross-sectional form factors of the fibre and is understood to cover tape fibres, and in particular spread tow tape fibres, in relation to either or both of reinforcing and thermoplastic polymer fibres.

The composite layer may have a porous or open structure prior to consolidation. Such a material may be formed by weaving as described above or in other ways, for example perforating a sheet of bulk polymer. The composite layer may instead be non-porous, for example combining a sheet such as a blown film of polymer with structural fibres and the conductive particles may be applied to the sheet.

The conductive particles may be applied to the surface of the composite layer by spraying a suspension of the conductive particles onto the composite layer. Alternatively, the composite layer may be imbibed with a suspension of the conductive particles, for example by bathing the composite layer in the suspension of the conductive particles. The conductive particles may be applied in the form of conductive paint. The conductive particles may be suspended in, for example, cellulose acetate or epoxy. The conductive particles may alternatively be applied in dry form, for example as a powder coating, and may be held in place, for example, by electrostatic forces.

The suspension of the conductive particles comprises a liquid, paste or solvent in which the conductive particles are suspended, and this may be removed as part of the method, for example by heating and/or applying a vacuum to the composite layer after the conductive particles have been applied. The liquid or solvent may be compatible with the polymer of the composite layer and thus may not be removed but rather remain and become part of the formed part.

The shape of the final conductive composite part may depend in part on the shape of the composite layer. Accordingly, the method may further comprise cutting the composite layer into a shape suitable for forming a target shape of the composite part.

The conductive particles may be carbon nanotubes, carbon black, graphite powder, metal powder, conductive nanomaterials such as metallic nanoparticles, carbon or silicon nanotubes, and 2D nanomaterials such as graphene flakes. The conductive particles can be substantially rotund, elongate, solid, hollow or tube shaped. The weight of the conductive particles relative to the weight of the composite layer is less than 20%, preferably less than 10%, more preferably less than 5% and most preferably less than 1%.

In accordance with the above, a conductive composite structure comprises a composite layer with structural fibres in a matrix of thermoplastic polymer, wherein conductive particles are disposed within the composite layer and the composite layer comprises regions of thermoplastic polymer substantially free of conductive particles.

The composite layer may comprise a consolidated mesh of thermoplastic polymer fibres and conductive particles embedded within the mesh between the consolidated thermoplastic polymer fibres. The consolidated mesh may have been formed from a mesh of combined fibres, the combined fibres comprising thermoplastic polymer fibres combined together with structural fibres. The fibres may have been combined, as described above. The conductive particles may form paths within the composite layer, the paths being substantially free of the thermoplastic polymer of the composite.

A part may be formed using the method above with multiple composite layers, for example including more than one conductive layer, one or more non-conductive layers providing additional structural strength or a combination of conductive and non-conductive layers. In embodiments with more than one conductive layer, the conductive layers may have mutually different properties, for example conductivity, to serve different functions. The conductive layers may of course have the same properties or conductivity. In either case, separate electrical connections can be made to respective conductive layers, or one or more conductive layers may be provided with an electrical connection and one or more may not be provided with an electrical connection, to server different respective functions like anti-static, resistive heating, strain sensing or power conveying functions, for example.

There are many uses and applications of the conductive composite parts, for example as panels or parts, which may be used as an interior vehicle part or exterior body panel, although the disclosure is in no way limited to this. A panel made from the conductive composite layer may have a sheet resistance of less than 1 MΩ/sq, preferably less than 1 kΩ/sq and more preferably less than 1 Ω/sq.

Embodiments will now be described by way of example with reference to the drawings of which:
Figure 1 is a flow diagram of a method for preparing a conductive composite part;
Figure 2 illustrates a consolidated conductive composite part;
   and
Figure 3 illustrates a consolidated conductive composite part with several layers.

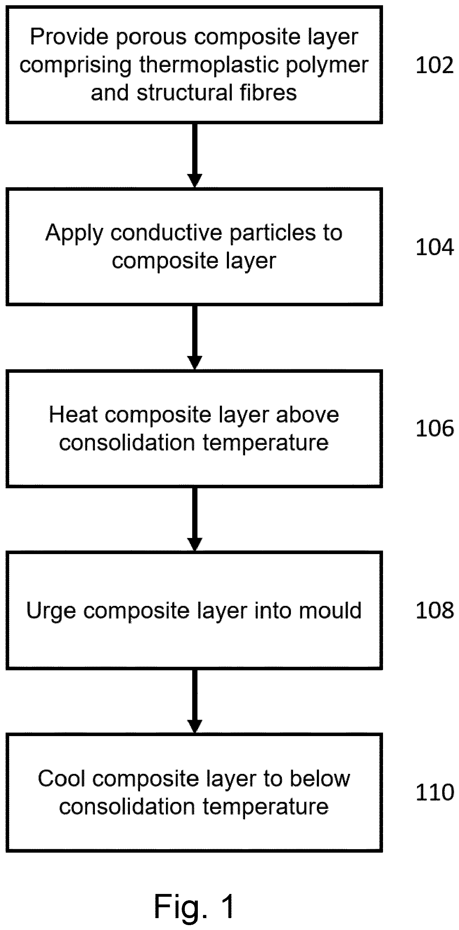

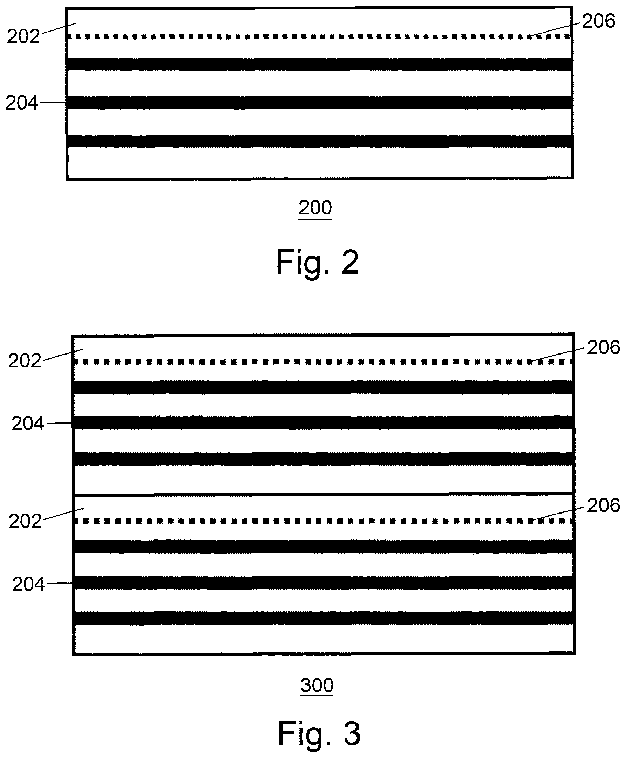

The following method provides a simple yet effective way of incorporating conductive particles into a composite part, increasing its conductivity. With reference to the flow diagram of Figure 1 and the conductive composite part 200 of Figure 2 and composite part 300 of Figure 3, a method of manufacturing a conductive composite part comprises providing 102 a composite layer comprising structural fibres. In some embodiments, the composite layer is provided in the form of a fabric comprising interwoven polypropylene fibres and glass fibres. More generally, the composite layer may be made from any thermoplastic polymer, where preferred thermoplastic polymers include polypropylene and polyester such as polyethylene terephthalate.

The glass fibres within the composite layer are reinforcing fibres that increase the strength of the conductive composite part 200. Thus, these reinforcing fibres may instead be made of many different materials known to the person skilled in the art, such carbon fibre. The reinforcing fibres may be formed into a yarn, which may be formed into a fabric, mesh or weave. The composite layer may be made from fibres or filaments of the thermoplastic polymer. These thermoplastic fibres can be commingled with the reinforcing fibres to form a commingled yarn, which can be woven into a fabric or mesh. Alternatively, the reinforcing fibres may be otherwise combined with the reinforcing fibres for example by parallel-weaving filaments or yarn made from the fibres together into the same fabric, or as a mixture of loose fibres, for example in the form of a felt, or in any other suitable form.

Instead of being a fabric, the composite layer and structural fibres may be formed from several sublayers, for example several layers of a weave or fabric as described above, commingled or otherwise; other pre-cursor fabrics or weaves; or alternating layers of a thermoplastic polymer fabric and of a layer of a fabric or weave of reinforcing fibre. It will be appreciated that many combinations of such sub layers and alternative arrangements of sublayers forming the composite layer and structural fibres are possible, without departing from the present disclosure.

Conductive particles, for example carbon nanotubes, are applied 104 to a surface of the composite layer. The conductive particles, which impart the conductive composite part 200 or 300 with its conductivity, may be any suitable conductive particles such as carbon black, graphite powder, metal powder, conductive nanomaterials such as metallic nanoparticles, carbon or silicon nanotubes, and 2D nanomaterials such as graphene flakes. In general, the conductive particles can be substantially rotund, elongate, solid, hollow or tube shaped.

The carbon nanotubes, or more generally the conductive particles, may be applied 104 in many different ways known to the skilled person. For example, a fabric of combined polypropylene fibres and glass fibres (the composite layer) can be laid out and imbibed with a suspension of conductive particles in a solvent, for example by bathing the composite layer in the suspension of the conductive particles or spraying the suspension of the conductive particles on the composite layer. The particles may be suspended in cellulose acetate or epoxy, for example. The solvent then may be removed, for example, it may be evaporated off and as such may be heated and/or removed under vacuum. Alternatively, it may be compatible with the thermoplastic polymer matrix and so may remain throughout the heating and cooling (consolidation) cycle.

The composite layer may have an open structure, such as that of a fabric, mesh, weave or felt, or more generally anything made from fibres or filaments of a thermoplastic polymer. Thus, the composite layer may be formed by weaving or in other ways, for example perforating a sheet of bulk polymer. When the conductive particles are applied 104, they are deposited onto the surface or throughout the open structure of the composite layer, for example amongst the fibres or filaments. It is thought that after the composite layer is consolidated (as described below), the particles may form continuous paths (wherein the particles are in electrical contact with each other) passing through the composite layer. The conductive particles are not homogeneously mixed within the composite layer. They may form discrete paths that are substantially free of the polymer of the composite layer, the bulk of the composite layer being substantially free of the conductive particles and surrounding the paths.

Since the conductive particles are not homogeneously dispersed throughout the consolidated composite layer where they can become electrically isolated, the percentage weight of conductive particles relative to the composite layer may be reduced while still imparting the composite layer with conductivity. As such, the weight percentage of the conductive particles relative to the composite layer may be less than 20%, preferably less than 10%, more preferably less than 5% and most preferably less than 1%.

Further layers may be provided next to the composite layer upon which the conductive particles have been applied. For example, a second composite layer similar to the composite layer can be provided on or under a first composite layer. The further layers may or may not be provided with conductive particles. Such further layers can be used to tailor the structural properties of the conductive composite part 200 or 300 (if multiple conductive layers are provided). For example, the composite part 300 has two conductive layers. Multiple conductive layers may be provided by applying conductive particles to a surface of a first composite layer, disposing a second composite layer on the first one and applying conductive particles to the second composite layer, prior to consolidating the layers as described above. More than two layers may be provided in a similar fashion, with or without applying conductive particles to each layer in turn. In this way, a stack of two or more layers can be provided.

By providing separate layers of conductive particles, a multitude of conductive elements may be combined, without interfering with one another. For example, a surface layer in the stack may provide anti-static properties and subsequent, interior, layers provide additional functionality, such as routing power, resistive heating or measuring strain.

Next, the layers are consolidated. The temperature of the composite layer, structural fibres, conductive particles and any further layers is raised 106 above a consolidation temperature, at which point the thermoplastic of the composite layer is fluid enough to flow around the structural fibres. If the thermoplastics in the composite layer melt at the consolidation temperature, polymer fibres of the thermoplastics may fuse together once cooled below their melting point, forming a continuous structure. In some embodiments, the fibres may melt only partially and thus fuse at their interfaces only, or only some of the fibres may melt completely while others fuse at their interfaces only.

The consolidation temperature may be equal to or above the glass transition/melting temperature of the thermoplastics in the composite layer, although it may also be lower, so long as the thermoplastics become fluid enough to flow around the structural fibres or fuse otherwise. The consolidation temperature is typically between 180-220 °C, depending of course on the nature of the thermoplastic polymers present. For example, this temperature range is suitable for polypropylene.

The layers can be pressed or urged 108 into contact with a mould, under their own weight, by application of positive or negative fluid pressure, mechanical pressing or otherwise, at which point the composite layer (and the structural fibres and conductive particles) takes on the shape of the mould. The layers are then cooled 110 to below the consolidation temperature to form the conductive composite part 200 or 300. It will be appreciated that in some embodiments the steps of softening or melting the layers and moulding of the softened or molten layers may proceed in parallel, that is the initially cool layers may be urged into contact with a mould and heated at the same or at a subsequent time while continuing to urge the composite layer into contact with the mould.

The shape of the final conductive composite part may depend in part on the shape of the composite layer. Accordingly, the method may further comprise cutting the composite layer into a shape suitable for forming a target shape of the composite part in the mould, for example as part of providing the composite layer at step 102. Alternatively, the composite layer may be cut to shape after applying 104 the conductive particles.

In accordance with the above, and with reference to Figure 2, a (consolidated) conductive composite part 200 comprises one or more polypropylene composite layer 202, glass structural fibres 204 and carbon nanotube conductive particles 206 within or on the composite layer 202. The composite part may, in some embodiments have several of the described conductive composite layers consolidated together, for example two such layers as illustrated for composite part 300 in Figure 3. Equally conductive composite layers are in some embodiments combined with non-conductive composite layers to enhance the structural properties of the resulting part, for example omitting the conductive particles from one of the layers in Figure 3 to provide a conductive portion either closer to one or the other surface of the part 300. Numerous combinations of one or more conductive layers with non-conductive layers are equally envisaged, for example, one more conductive layers sandwiched between non-conductive structural layers or at one end of a stack of structural layers. Figures 2 and 3 is an illustration and is not intended to be an accurate representation of the distribution of glass structural fibres 204 and carbon nanotube conductive particles 206 within the composite layer 202.

A panel or sheet may be made from the conductive composite parts disclosed above, for example part 200 or part 300 disclosed above. Accordingly, the consolidated panel or sheet may have a sheet resistance of less than 1 MΩ/sq, preferably less than 1 kΩ/sq and more preferably less than 1 Ω/sq. Such a panel has many applications, such as in a vehicle, wherein strain or structural integrity of the panel can be monitored by measuring the conductivity of the panel, while such panels prevent the build-up of static charge.

It will be appreciated that the above description is made by way of example and not limitation of the scope of the appended claims, including any equivalents as included within the scope of the claims. Various modifications are possible and will be readily apparent to the skilled person in the art. Likewise, features of the described embodiments can be combined with any appropriate aspect described above and optional features of any one aspect can be combined with any other appropriate aspect.

## Claims

1. A method of manufacturing a conductive composite part, the method comprising:
providing a composite layer comprising a thermoplastic polymer and structural fibres;
applying conductive particles onto a surface of the composite layer;
heating the composite layer and applied conductive particles above a consolidation temperature of the composite layer; and
cooling the composite layer to below the consolidation temperature to form the conductive composite part.

2. The method of claim 1, wherein the thermoplastic polymer is provided in the form of a fabric comprising a weave of thermoplastic polymer fibres.

3. The method of claim 2, wherein the fabric comprises a weave of combined fibres, each combined fibre comprising thermoplastic polymer and structural fibres combined together.

4. The method of any preceding claim, wherein applying conductive particles to the composite layer comprises applying, for example spraying, a suspension of the conductive particles onto the composite layer.

5. The method of any preceding claim, wherein applying conductive particles to the composite layer comprises applying conductive paint to the composite layer.

6. The method of any preceding claim, comprising disposing a further composite layer onto the composite layer and applying conductive particles to the further composite layer before heating the composite layer, further composite layer and applied conductive particles.

7. A conductive composite part comprising:
a composite layer comprising structural fibres in a matrix of thermoplastic polymer, wherein conductive particles are disposed within the composite layer and the composite layer comprises regions of thermoplastic polymer substantially free of conductive particles.

8. The conductive composite part of claim 7, wherein the polymer matrix comprises a consolidated mesh of thermoplastic polymer fibres and conductive particles are embedded within the mesh between the consolidated thermoplastic polymer fibres.

9. The conductive composite part of claim 8, wherein the consolidated mesh was formed from a mesh of combined fibres, the combined fibres comprising thermoplastic polymer fibres combined together with structural fibres.

10. The conductive composite part of any of claims 7 to 9, wherein the composite layer is consolidated together with an adjacent composite layer.

11. The conductive composite part of claim 10, wherein the adjacent composite layer comprises conductive particles.

12. The conductive composite part of claim 10 or 11, wherein a sheet conductivity of the adjacent composite layer is different from a sheet conductivity of the composite layer.

13. The method of any of claims 1 to 6 or the conductive composite part of any of claims 7 to 12, wherein the conductive particles are carbon nanotubes.

14. The method of any of claims 1 to 6 or the conductive composite part of any of claims 7 to 13, wherein the weight of the conductive particles relative to the weight of the composite layer is less than 20%, preferably less than 10%, more preferably less than 5% and most preferably less than 1%.

15. A vehicle comprising the conductive composite part of any of claims 7 to 14.
